# EUROPÄISCHE PATENTSCHRIFT

(11) **EP 1 262 061 B1**
(45) Veröffentlichungstag und Bekanntmachung des Hinweises auf die Patenterteilung: **24.09.2003**
(21) Anmeldenummer: 01913631.6
(22) Anmeldetag: 14.02.2001
(51) Int. Cl.: H04N 3/15

(54) **SCHALTUNGSANORDNUNG EINES VIDEO-SENSOR-CHIPS**
VIDEO SENSOR CHIP CIRCUIT
CIRCUIT POUR PUCE DETECTEUR VIDEO

(30) Priorität: 19.02.2000 DE 10007689
(43) Veröffentlichungstag der Anmeldung: 04.12.2002
(73) Patentinhaber: ROBERT BOSCH GMBH, 70442 Stuttgart (DE)
(72) Erfinder: HENNO, Christiane, 72070 Reutlingen (DE); BAUER, Roger, 72762 Reutlingen (DE); COCHARD, Roland, CH-1110 Morges (CH)
(86) Internationale Anmeldenummer: DE0100553
(87) Internationale Veröffentlichungsnummer: WO01061990

(56) Entgegenhaltungen:
- EP-A- 0 739 039
- EP-A- 0 858 212
- US-A- 4 819 071
- CHYE HUAT AW ET AL: "A 128X128-PIXEL STANDARD-CMOS IMAGE SENSOR WITH ELECTRONIC SHUTTER" IEEE INTERNATIONAL SOLID STATE CIRCUITS CONFERENCE,US,IEEE INC. NEW YORK, Bd. 39, 1. Februar 1996 (1996-02-01), Seiten 180-181,440, XP000685586 ISSN: 0193-6530
- RICQUIER N ET AL: "RANDOM ADDRESSABLE CMOS IMAGE SENSOR FOR INDUSTRIAL APPLICATIONS" SENSORS AND ACTUATORS A,CH,ELSEVIER SEQUOIA S.A., LAUSANNE, Bd. A44, Nr. 1, 1. Juli 1994 (1994-07-01), Seiten 29-35, XP000469151 ISSN: 0924-4247

## Beschreibung

Die Erfindung betrifft eine Schaltungsanordnung eines Video-Sensor-Chips.

### Stand der Technik

Video-Sensor-Chips der gattungsgemäßen Art sind z.B. aus EP-A-0 858 212 bekannt. Diese umfassen in einer Matrix angeordnete, lichtempfindliche Bildelemente (Pixel), die einen lichtempfindlichen Bereich des Video-Sensor-Chips definieren. Jedes der Bildelemente umfasst einen Phototransistor, der in Abhängigkeit einer auf den jeweiligen Phototransistor wirkenden Helligkeit einen Photostrom liefert. Helligkeitsänderungen führen zu einer proportionalen Änderung des Photostroms.

Bekannt ist, diesen Ausgangsphotostrom der Bildelemente logarithmisch zu verstärken und als Spannungssignal einer Auswerteschaltung zuzuführen. Ein derartiger Video-Sensor-Chip ist beispielsweise in der DE 42 09 536 C2 beschrieben. Allerdings ist nachteilig, dass bei dem bekannten Video-Sensor-Chip mit logarithmischer Kennlinie eine relativ große lichtempfindliche Fläche notwendig ist. Diese stellt eine parasitäre Kapazität dar und führt bei schwachen Beleuchtungsstärken und bei Hell/Dunkel-Übergängen zu hohen Einstellzeiten des Spannungsausgangs aufgrund der Entladung der parasitären Kapazitäten, mit einem relativ kleinen Strom des Phototransistors in dessen schwachen Inversionsbetrieb.

Hierdurch kommt es zu einem sogenannten Nachzieheffekt, der insbesondere bei einer hohen Bildwiederholfrequenz nachteilig ist.

### Vorteile der Erfindung

Die erfindungsgemäße Schaltungsanordnung mit den im Anspruch 1 genannten Merkmalen bietet demgegenüber den Vorteil, dass in einfacher Weise ein Video-Sensor-Chip bereitgestellt werden kann, der mit einer relativ kleinen lichtempfindlichen Fläche und somit kleinen parasitären Kapazitäten auskommt und der mit hoher Bildwiederholfrequenz ohne Nachzieheffekt betreibbar ist. Dadurch, dass die Bildelemente und ein jedem Bildelement zugeordneter Verstärker in einem gemeinsamen Bauelement monolithisch integriert sind, wobei die Verstärker außerhalb einer lichtempfindlichen.Fläche des Video-Sensor-Chips angeordnet sind, ist vorteilhaft möglich, den für die lichtempfindliche Fläche benötigten Flächenbedarf auf die Anordnung der integrierten lichtempfindlichen Bildelemente zu beschränken, während die zugeordneten Verstärker in einem weiteren - außerhalb des lichtempfindlichen Bereiches liegenden - Abschnitt des monolithisch integrierten Bauelementes implementiert werden können.

Es ist vorgesehen, dass die Verstärker als Transimpedanz-Verstärker geschaltet sind. Durch eine derartige Ausgestaltung des Verstärkers wird die bekannte Spannungs-Wandlung von Transimpedanz-Verstärkern ausgenutzt, wobei die Ausgangsimpedanz durch die Rückkopplungsstrecke der Transimpedanz-Verstärker, insbesondere dessen Rückkopplungswiderstand, bestimmt ist.

Durch eine derartige Ausgestaltung wird möglich, den Photostrom der lichtempfindlichen Bildelemente in eine proportionale Spannung zu wandeln, ohne dass der Photostrom über die parasitäre Kapazität der Sensorfläche (hier kleine Sensorfläche) integriert wird.

Ferner ist in der Erfindung vorgesehen, dass die Rückkopplungsstrecke des Transimpedanz-Verstärkers von einem schwach invers arbeitenden Transistor gebildet ist. Hierdurch wird eine logarithmische Konversion zwischen dem Eingangssignal des Verstärkers, dass heißt dem Photostrom beziehungsweise der dem Photostrom proportionalen Helligkeit, und dem Ausgangssignal des Verstärkers, dass heißt dem Spannungshub am Ausgang des Verstärkers, erreicht. So realisiert der als rückgekoppelter Widerstand geschaltete Transistor keine lineare Strom-Spannungskonversion, sondern eine logarithmische Konversion, und kann somit einen größeren Helligkeitsbereich abdecken. Ferner kann hierdurch eine hohe Ausgangsdynamik und damit eine hohe Kontrastempfindlichkeit sichergestellt werden, ohne auf den Vorteil der kurzen optischen Einschwingzeiten der Bildelemente zu verzichten. Hierdurch wird eine besonders hohe Bildwiederholfrequenz ohne Nachzieheffekt möglich.

Insbesondere, wenn in bevorzugter Ausgestaltung der Erfindung vorgesehen ist, dass die Verstärker mit den Bildelementen über zeilenweise und/oder spaltenweise der Bildelemente-Matrix zuschaltbare Schaltmittel verbunden sind, wird vorteilhaft möglich, die in dem relativ klein gehaltenen, lichtempfindlichen Bereich angeordneten Bildelemente wahlfrei zu adressieren. Die zugeordneten Verstärker werden beim Auslesen der Ausgangssignale der lichtempfindlichen Bildelemente je nach Auslegung spaltenweise und/oder zeilenweise geschaltet. Da diese sich außerhalb des Bildelementefeldes (Matrix) befinden, und zeilenweise und/oder spaltenweise zuschaltbar sind, können diese eindimensional in das monolithisch integrierte Bauelement implementiert werden. Hieraus ergibt sich eine erhebliche Einsparung an Chipfläche.

Ferner ist bevorzugt vorgesehen, dass pro Zeile und/oder pro Spalte der Matrix der Bildelemente ein Verstärker für alle Bildelemente der Zeile und/oder der Spalte zuschaltbar ist. Hierdurch wird vorteilhaft erreicht, dass der Stromverbrauch des gesamten Video-Sensor-Chips reduziert ist, da die lichtempfindlichen Bildelemente selber keine zusätzliche Stromversorgung benötigen und pro Zeile und/oder Spalte nur jeweils ein Verstärker eine Stromversorgung erfordert.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Schaltungsanordnung eines Bildelementes in einer ersten Ausführungsvariante;
- Figur 2: eine Schaltungsanordnung eines Bildelementes in einer zweiten Ausführungsvariante;
- Figur 3: eine Kennlinie der Schaltungsanordnung gemäß Figur 2;
- Figur 4: weitere Kennlinien der Schaltungsanordnung gemäß Figur 1 und Figur 2 und
- Figur 5: eine Schaltungsanordnung eines Bildelementes in einer dritten Ausführungsvariante.

### Beschreibung der Ausführungsbeispiele

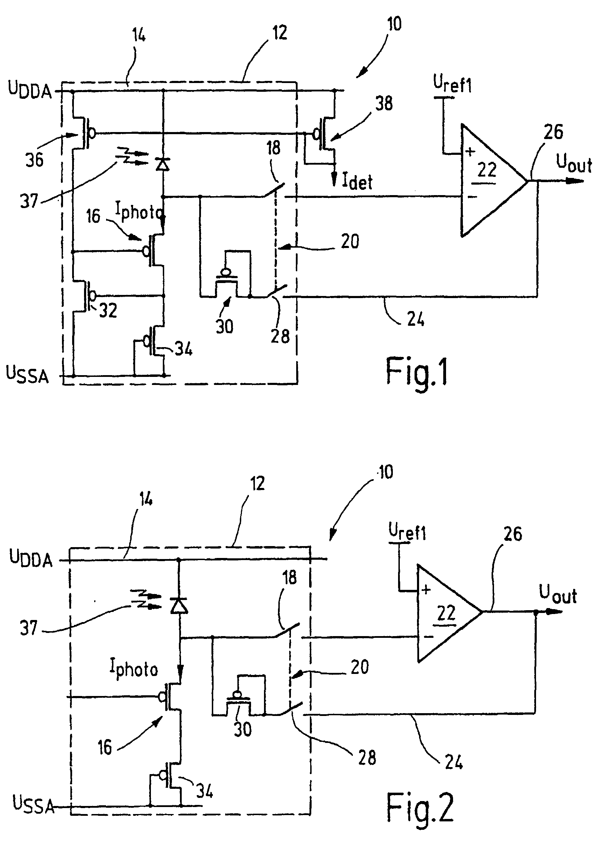

Figur 1 zeigt eine Schaltungsanordnung 10 eines lichtempfindlichen Bildelementes (Pixel) 12 eines insgesamt nicht dargestellten Video-Sensor-Chips. Der Video-Sensor-Chip umfasst eine Vielzahl, in einer Matrix angeordneter Bildelemente 12.

Die Bildelemente 12 definieren in ihrer Gesamtheit eine lichtempfindliche Fläche des Video-Sensor-Chips, wobei jedes Bildelement 12 hiervon eine eigene Teilfläche 14 ausbildet (innerhalb des gestrichelt dargestellten Bereiches).

Das Bildelement 12 umfasst einen Phototransistor 16. Der Sourceanschluss des Phototransistors 16 ist über einen ersten Schaltkontakt 18 eines Schaltmittels 20 mit dem invertierenden Eingang eines Transimpedanz-Verstärkers 22 verbunden. Am nicht invertierenden Eingang eines Transimpedanz-Verstärkers 22 liegt eine Referenzspannung U_{ref1} an. Der Sourceanschluss des Phototransistors 16 ist ferner über einen Rückkoppelzweig 24 mit dem Ausgang 26 des Transimpedanz-Verstärkers 22 verbunden. Innerhalb der Rückkoppelstrecke 24 ist ein Schaltkontakt 28 des Schaltmittels 20 und ein als Widerstand geschalteter Transistor 30 angeordnet. Ein Drainanschluss des Phototransistors 16 ist mit Transistoren 32 und 34 verbunden. Ferner umfasst das Bildelement 12 eine Stromspiegelschaltung von Transistoren 36 und 38, die mit einem Gateanschluss des Phototransistors 16 verbunden ist.

Die in Figur 1 dargestellte Schaltungsanordnung 10 zeigt folgende Funktion:

Bei auf den Phototransistor 16 auftreffendem Licht 37 wird ein Photostrom Iₚₕₒₜₒ generiert. Dieser Photostrom Iₚₕₒₜₒ ist direkt proportional der Helligkeit des Lichtes 37. Über einen Zeilendecoder und/oder Spaltendecoder werden die Schaltmittel 20 betätigt. Durch einen entsprechenden Steuerimpuls werden beispielsweise alle Schaltmittel 20 einer Zeile angeordneter Bildpunkte 12 der Gesamtmatrix der Bildpunkte 12 des Video-Sensor-Chips angesteuert. Hierdurch schließen die Schaltkontakte 18 und 28. Der dann in geschlossenem Rückkoppelzweig 24 liegende Transistor 30 nimmt den Strom Iₚₕₒₜₒ auf und wandelt diesen in eine Ausgangsspannung Uₒᵤₜ am Ausgang 26 des Transimpedanz-Verstärkers 22. Der Transistor 30 arbeitet in dem Betriebszustand der schwachen Inversion, so dass eine logarithmische Konversion zwischen dem Photostrom Iₚₕₒₜₒ und der Ausgangspannung Uₒᵤₜ gegeben ist. Der Verstärkungseffekt der Gegenkopplung - durch gleichzeitig geschlossene Schaltkontakte 18 und 28 - beeinflusst nur den Photostrom Iₚₕₒₜₒ, da die Sourcespannung des Phototransistors 16 sich nicht ändert. Hier wirkt das Prinzip der virtuellen Masse. Insgesamt wird deutlich, dass der Transimpedanz-Verstärker 22 als Strom-Spannungs-Wandler arbeitet, wobei die Ausgangsimpedanz des Verstärkers 22 durch den Rückkopplungszweig 24 mit dem als Widerstand geschalteten Transistor 30 bestimmt wird und der Transistor 30 (als Widerstand geschaltet) die Transimpedanz realisiert. Durch Änderung der Helligkeit des Lichtes 37 ändert sich der Photostrom Iₚₕₒₜₒ proportional, so dass ein entsprechend geänderter Spannungshub der Ausgangsspannung Uₒᵤₜ am Ausgang 26 mit kurzer Reaktionszeit anliegt. Innerhalb des Bildpunktes 12 wird keine parasitäre Kapazität mit dem Photostrom Iₚₕₒₜₒ beaufschlagt, so dass Lade- beziehungsweise Entladevorgänge dieser parasitären Kapazität keinen Einfluss auf die Strom-Spannungs-wandlung haben. Durch den im Rückkoppelzweig 24 angeordneten Transistor 30 wird eine logarithmische Konversion erreicht, so dass eine hohe Ausgangsdynamik und damit eine hohe Kontrastempfindlichkeit der Schaltungsanordnung 10 gegeben ist.

Über die Transistoren 32 und 34 ist ein Arbeitspunkt des Phototransistors 16 einstellbar. Dieser ist so eingestellt, dass der Phototransistor 16 immer in Betrieb der schwachen Inversion bleibt. Über den Transistor 36 erfolgt eine Spannungsstabilisierung der Schaltungsanordnung 10. Hierbei sind die Transistoren 36 und 38 des Stromspiegels so dimensioniert, dass der Transistor 36 immer in dem Betriebszustand der schwachen Inversion bleibt, auch wenn der Transistor 38 durch Stromfluss des Stromes I_{det} sich in einem Betriebszustand der starken Inversion befindet. Durch diese Dimensionierung wird am Gateanschluss des Phototransistors 16 ein festes Potential eingestellt, so dass die Rückkopplung über den Phototransistor 16 und den Transistor 32 inaktiv ist.

Figur 2 zeigt eine gegenüber Figur 1 abgewandelte Ausführungsvariante der Schaltungsanordnung 10, wobei gleiche Teile mit gleichen Bezugszeichen versehen und nicht nochmals erläutert sind. Da durch die Dimensionierung der Stromspiegelschaltung der Transistoren 36 und 38 eine konstante Spannung am Gateanschluss des Phototransistors 16 eingestellt wird, kann - wie Figur 2 zeigt - die Stromspiegelschaltung der Transistoren 36 und 38 durch eine Referenzspannung U_{ref2} ersetzt werden, die am Gateanschluss des Phototransistors 16 anliegt. Die Referenzspannung U_{ref2} ist hierbei so gewählt, dass der Phototransistor 16 immer im Betriebszustand der schwachen Inversion bleibt. Hierdurch wird eine Strukturierung der Transistoren 32, 36 und 38 nicht erforderlich. Der Aufbau der Schaltungsanordnung 10, insbesondere im Bereich der Bildelemente 12, vereinfacht sich hierdurch.

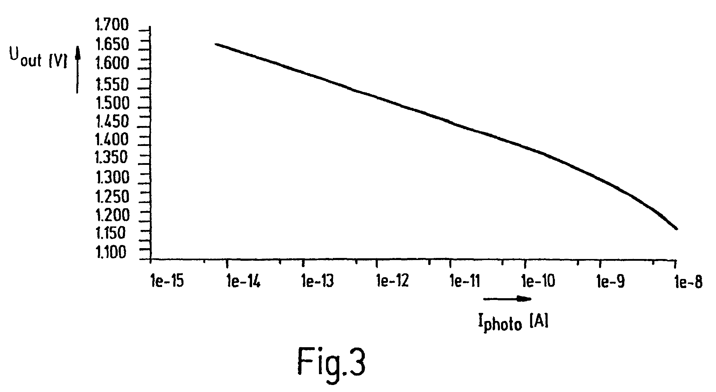

Figur 3 zeigt eine Kennlinie der Schaltungsanordnung 10, wobei die Ausgangsspannung Uₒᵤₜ über dem logarithmisch aufgetragenen Fotostrom Iₚₕₒₜₒ aufgetragen ist. Es wird der im Wesentlichen lineare Kennlinienverlauf des Ausgangssignals Uₒᵤₜ deutlich.

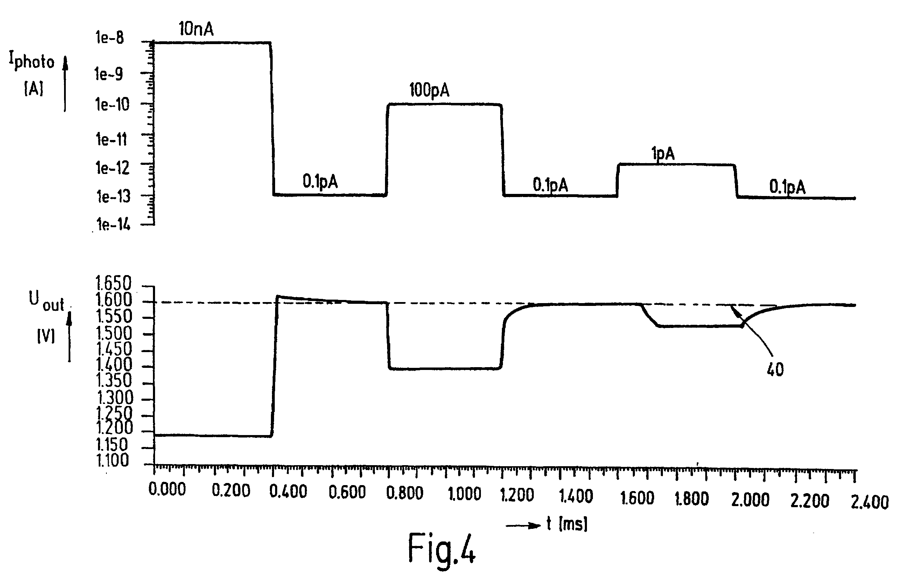

In Figur 4 ist der Zusammenhang zwischen einer Änderung des Photostromes Iₚₕₒₜₒ zu der Ausgangsspannung Uₒᵤₜ über der Zeit t gezeigt. Anhand der Sprungantwort der Ausgangsspannung Uₒᵤₜ bei hohen Kontrasten - auf hell folgt dunkel - und bei Kontrasten im Bereich schwacher Beleuchtungsstärken - auf dunkel folgt weniger dunkel - wird deutlich, dass eine unverzügliche Sprungantwort folgt. Eine Zeitverzögerung der Sprungantwort beträgt im ungünstigsten Fall zirka 0,4 ms. Gestrichelt ist eine Linie 40 eingetragen, die der Ausgangsspannung Uₒᵤₜ, hier 1,6 V, bei einem Photostrom Iₚₕₒₜₒ von 0,1 pA entspricht. Ausgehend von diesem konstanten Photostrom Iₚₕₒₜₒ 0,1 pA sind die infolge entsprechender Helligkeitsänderung sich ergebenden proportionalen Photoströme Iₚₕₒₜₒ mit den entsprechenden Sprungantworten dargestellt. Da es sich um einen Differenzeingang des Transimpedanz-Verstärkers 22 handelt, führt ein höherer Photostrom Iₚₕₒₜₒ zu einem niedrigeren absoluten Wert der Ausgangsspannung Uₒᵤₜ, der einer hohen Differenz zur Referenzspannung U_{ref1} entspricht.

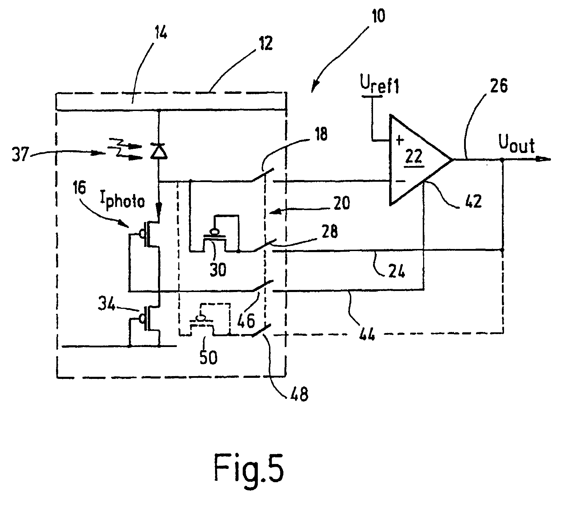

Figur 5 zeigt eine weitere Schaltungsvariante, wobei gleiche Teile wie in Figur 1 und 2 wiederum mit gleichen Bezugszeichen versehen und nicht nochmals erläutert sind. In der hier gezeigten Schaltungsvariante ist der Gateanschluss des Phototransistors 16 mit einem Verstärkerausgang 42 über eine Rückkopplungsstrecke 44 verbunden. In die Rückkopplungsstrecke 44 ist ein weiterer Schaltkontakt 46 des Schaltmittels 20 geschaltet. So wird gleichzeitig mit der Rückkopplungsstrecke 24 über den als Widerstand geschalteten Transistor 30 die Rückkopplungsstrecke 44 geschlossen und am Gateanschluss des Phototransistors 16 ein von dem Photostrom abhängiges Spannungspotential über den Ausgang 42 des Verstärkers 22 angelegt. Dieses Spannungspotential ist hierbei abhängig von dem Photostrom Iₚₕₒₜₒ, so dass ein Betrieb des Phototransistors 16 im Betriebszustand der schwachen Inversion bleibt. Hierdurch wird die Stabilität der Schaltungsanordnung 10 weiter erhöht und der sogenannte Nachzieheffekt weiter verringert.

In Figur 5 ist gestrichelt eine weitere Ausführungsvariante angedeutet. Demnach kann in die Rückkopplungsstrecke 44 anstelle des in der schwachen Inversion arbeitenden Transistors 30 ein in der starken Inversion arbeitender Transistor 50 eingebunden werden. Dieser ist über einen Schaltkontakt 48 des Schaltmittels 20 ansteuerbar. Durch eine derartige Schaltungsanordnung wird erreicht, dass eine gegebenenfalls erwünschte lineare Konversion realisiert werden kann.

## Patentansprüche

1. Schaltungsanordnung eines Videosensorchips, mit in einer Matrix angeordneten, lichtempfindlichen Bildelementen (12), wobei jedes Bildelement über einen Phototransistor (16) verfügt, dessen Ausgangsphotostrom logarithmisch verstärkt und als Spannungssignal einer Auswerteschaltung zugeführt wird, wobei die Bildelemente und ein jedem Bildelement zugeordneter Verstärker in einem gemeinsamen Bauelement monolithisch integriert sind, wobei die Verstärker außerhalb einer lichtempfindlichen Fläche des Videosensorchips angeordnet sind, wobei der Verstärker (22) als Transimpedanz-Verstärker geschaltet ist, dessen Rückkopplungsstrecke von einem schwach invers arbeitenden Transistor (30) gebildet ist.

2. Schaltungsanordnung, nach Anspruch 1, **dadurch gekennzeichnet, dass** die Verstärker (22) mit den Bildelementen (12) über zeilenweise und/oder spaltenweise der Matrix zuschaltbare Schaltmittel (20) verbunden sind.

3. Schaltungsanordnung nach einem der vorhergehenden Ansprüche, **dadurch gekennzeichnet, dass** pro Zeile und/oder pro Spalte ein Verstärker (22) für alle Bildelemente (12) der Zeile und/oder der Spalte zuschaltbar ist.

4. Schaltungsanordnung nach Anspruch 1, **dadurch gekennzeichnet, dass** der Transistor (30) innerhalb der lichtempfindlichen Fläche (14) angeordnet ist und mit jedem Bildelement (12) gemeinsam dem Verstärker (22) zuschaltbar ist.

5. Schaltungsanordnung nach einem der vorhergehenden Ansprüche, **dadurch gekennzeichnet, dass** der Phototransistor (16) mit einer konstanten Gatespannung betrieben ist.

6. Schaltungsanordnung nach Anspruch 5, **dadurch gekennzeichnet, dass** der Gateanschluss des Phototransistors (16) mit einer Stromspiegelschaltung von Transistoren (36, 38) verbunden ist.

7. Schaltungsanordnung nach Anspruch 5, **dadurch gekennzeichnet, dass** der Gateanschluss des Phototransistors (16) mit einer festen Referenzspannungsquelle (U_{ref2}) verbunden ist.

8. Schaltungsanordnung nach Anspruch 5, **dadurch gekennzeichnet, dass** der Gateanschluss des Phototransistors (16) über einen Rückkoppelzweig (44) mit einem Ausgang (42) des Verstärkers (22) verbunden ist, so. dass die Gatespannung des Phototransistors (16) von dem Photostrom abhängig ist.

9. Schaltungsanordnung nach Anspruch 8, **dadurch gekennzeichnet, dass** der Rückkoppelzweig (44) einen Schaltkontakt (46) des Schaltmittels (20) umfasst.

## Claims

1. Circuit arrangement of a video sensor chip, having light-sensitive pixels (12) arranged in a matrix, each pixel being provided with a phototransistor (16), whose output photocurrent is amplified logarithmically and fed as voltage signal to an evaluation circuit, the pixels and an amplifier assigned to each pixel being monolithically integrated in a common component, the amplifiers being arranged outside a light-sensitive area of the video sensor chip, the amplifier (22) being connected as a transimpedance amplifier whose feedback path is formed by a transistor (30) operating in weakly inverse fashion.

2. Circuit arrangement according to Claim 1, **characterized in that** the amplifiers (22) are connected to the pixels (12) via switching means (20) that can be connected into the matrix row by row and/or column by column.

3. Circuit arrangement according to one of the preceding claims, **characterized in that**, per row and/or per column, an amplifier (22) can be connected in for all the pixels (12) of the row and/or of the column.

4. Circuit arrangement according to Claim 1, **characterized in that** the transistor (30) is arranged within the light-sensitive area (14) and can be connected jointly with each pixel (12) to the amplifier (22).

5. Circuit arrangement according to one of the preceding claims, **characterized in that** the phototransistor (16) is operated with a constant gate voltage.

6. Circuit arrangement according to Claim 5, **characterized in that** the gate terminal of the phototransistor (16) is connected to a current mirror circuit of transistors (36, 38).

7. Circuit arrangement according to Claim 5, **characterized in that** the gate terminal of the phototransistor (16) is connected to a fixed reference voltage source (U_{ref2}).

8. Circuit arrangement according to Claim 5, **characterized in that** the gate terminal of the phototransistor (16) is connected to an output (42) of the amplifier (22) via a feedback path (44), so that the gate voltage of the phototransistor (16) is dependent on the photocurrent.

9. Circuit arrangement according to Claim 8, **characterized in that** the feedback path (44) comprises a switching contact (46) of the switching means (20).

## Revendications

1. Circuit pour une puce détecteur vidéo, avec des éléments d'image (12) sensibles à la lumière disposés en une matrice, dans lequel chaque élément d'image dispose d'un phototransistor (16), dont le courant photoélectrique de sortie est amplifié de façon logarithmique et est envoyé comme signal de tension à un circuit d'évaluation,
dans lequel
les éléments d'image et un amplificateur associé à chaque élément d'image sont intégrés de façon monolithique dans un composant commun, dans lequel les amplificateurs sont disposés à l'extérieur d'une surface photosensible de la puce détecteur vidéo, dans lequel l'amplificateur (22) est monté en amplificateur de transimpédance, dont la zone de réaction est formée par un transistor (30) travaillant en inversion faible.

2. Circuit selon la revendication 1,
**caractérisé en ce que**
les amplificateurs (22) sont raccordés aux éléments d'image (12) par des moyens de commutation (20) pouvant être connectés en ligne et/ou en colonne à la matrice.

3. Circuit selon l'une quelconque des revendications précédentes,
**caractérisé en ce qu'**
un amplificateur (22) peut être connecté par ligne et/ou par colonne pour tous les éléments d'image (12) de la ligne et/ou de la colonne.

4. Circuit selon la revendication 1,
**caractérisé en ce que**
le transistor (30) est disposé à l'intérieur de la surface photosensible (14) et peut être connecté à chaque élément d'image (12) en même temps que l'amplificateur (22).

5. Circuit selon l'une quelconque des revendications précédentes,
**caractérisé en ce que**
le phototransistor (16) fonctionne avec une tension de grille constante.

6. Circuit selon la revendication 5,
**caractérisé en ce que**
la borne de grille du phototransistor (16) est raccordée à un circuit image de courant de transistors (36, 38).

7. Circuit selon la revendication 5,
**caractérisé en ce que**
la borne de grille du phototransistor (16) est raccordée à une source de tension de référence constante (U_{réf2}).

8. Circuit selon la revendication 5,
**caractérisé en ce que**
la borne de grille du phototransistor (16) est raccordée à une sortie (42) de l'amplificateur (22) par une branche de rétroaction (44), de telle façon que la tension de grille du phototransistor (16) dépende du courant photoélectrique.

9. Circuit selon la revendication 8,
**caractérisé en ce que**
la branche de rétroaction (44) comprend un contact de commutateur (46) du moyen de commutation (20).
